# FASCICULE DE BREVET EUROPEEN

(11) **EP 1 836 480 B1**
(45) Date de publication et mention de la délivrance du brevet: **13.06.2012**
(21) Numéro de dépôt: 05850626.2
(22) Date de dépôt: 28.12.2005
(51) Int. Cl.: G01N 25/52, G01N 25/00, G01N 33/28, G01N 21/72

(54) **PROCEDE ET DISPOSITIF POUR LA DETERMINATION DU POINT DE FUMEE DES HYDROCARBURES**
VERFAHREN UND VORRICHTUNG ZUR BESTIMMUNG DES RAUCHPUNKTS VON KOHLENWASSERSTOFFEN
METHOD AND DEVICE FOR DETERMINING THE SMOKE POINT OF HYDROCARBONS

(30) Priorité: 30.12.2004 FR 0414087
(43) Date de publication de la demande: 26.09.2007
(73) Titulaire: TOTAL RAFFINAGE MARKETING, 92800 Puteaux (FR)
(72) Inventeur: REMINIAC, Myriam, F-76620 Le Havre (FR); PESTIAUX, Pierre, F-76400 Senneville sur Fécamp (FR)
(74) Mandataire: Roger, Walter
(86) Numéro de dépôt international: PCT/FR2005/003294
(87) Numéro de publication internationale: WO 2006/072708

(56) Documents cités:
- US-A- 2 819 607
- US-A1- 2002 144 455
- PATENT ABSTRACTS OF JAPAN vol. 013, no. 361 (P-917), 11 août 1989 (1989-08-11) & JP 01 119764 A (SHOWA YOTSUKAICHI SEKIYU KK), 11 mai 1989 (1989-05-11)

## Description

La présente invention concerne un procédé amélioré pour la détermination du point de fumée des hydrocarbures, comprenant notamment l'acquisition et l'analyse d'images numériques, ainsi qu'un dispositif servant à mettre en oeuvre un tel procédé.

Le point de fumée d'un hydrocarbure est une caractéristique couramment déterminée dans les laboratoires des raffineries, principalement sur les kérosènes, les fiouls pour l'aviation, ou encore les pétroles lampants.

Cette caractéristique est un paramètre important puisque directement lié à la composition en hydrocarbures des carburants testés. En effet, plus le rapport C/H, et donc la teneur en composés aromatiques est faible, plus le point de fumée est élevé et meilleur est le comportement du carburant lors de sa combustion. En d'autres termes, le point de fumée est relié quantitativement au transfert potentiel de chaleur radiative et, dans la mesure où ce transfert de chaleur exerce une forte influence sur la température des pièces métalliques, le point de fumée devient donc un indicateur prédictif de la longévité des dites pièces métalliques.

Le point de fumée présente malheureusement l'inconvénient d'être assez délicat à mesurer. On utilise généralement à cet effet une méthode d'analyse faisant l'objet d'une normalisation (telle que la méthode décrite dans la norme ASTM D 1322 ou ses équivalents, par exemple ISO 3014, IP 57 ou NF M 07-028) pour permettre la détection, puis la mesure de la hauteur maximale d'une flamme (généralement exprimée en mm et avec une précision au dixième de mm) qui peut être obtenue à partir de l'hydrocarbure testé sans formation de fumée.

Lors d'une telle mesure, l'échantillon est brûlé dans une lampe à mèche, décrite également dans la norme ASTM D 1322, et l'opérateur fait varier la position du brûleur de manière à modifier progressivement la hauteur et l'aspect de la flamme qui passe lentement d'un état relativement allongé et sautillant avec une extrémité supérieure dégageant une légère fumée, à un état présentant une hauteur de flamme plus courte, avec une extrémité supérieure parfaitement arrondie. Entre ces deux états de la flamme, l'opérateur doit également distinguer deux autres formes intermédiaires, à savoir celle présentant une pointe allongée dont les bords apparaissent concaves à la partie supérieure et celle où l'extrémité pointue vient à peine de disparaître et qui forme une flamme légèrement arrondie sans fumée. C'est quand la flamme présente ce dernier aspect que l'opérateur relève la hauteur de la flamme, sur une échelle graduée en mm disposée à l'intérieur et à l'arrière de la lampe. La valeur définitive du point de fumée retenue pour l'échantillon analysé correspond à la moyenne de trois mesures successives, calculée à 0,1 mm près.

La méthode de mesure du point de fumée, telle que définie dans la norme ASTM D1322, comme toutes les méthodes d'analyse de ce type, présente néanmoins des limites en termes de précision, essentiellement dues aux difficultés d'appréciation de l'opérateur, notamment lors de sa prise de décision pour juger l'aspect correct de la flamme, conformément à la norme, et également au moment de la mesure visuelle de la hauteur de cette même flamme sur l'échelle graduée. En effet, la bonne qualité de la mesure de cette hauteur requiert des précautions opératoires particulières dont les mises en oeuvre dépendent totalement de l'opérateur. C'est ainsi que la répétabilité et la reproductibilité de l'essai normalisé sont respectivement de 2 mm et 3 mm.

La Demanderesse s'est proposé de remédier à cette difficulté en remplaçant l'oeil et le cerveau de l'opérateur par un système technique d'acquisition d'images numériques constitué essentiellement d'une caméra numérique, ou d'un équivalent d'une telle caméra numérique, et un système informatique associé permettant d'analyser et de traiter les images numériques enregistrées. Toutefois, la distinction des différentes formes caractéristiques de la flamme, entre l'état relativement allongé et sautillant avec une extrémité supérieure dégageant une légère fumée et l'état présentant une hauteur de flamme plus courte avec une extrémité supérieure parfaitement arrondie, est subjective et se prête mal à l'utilisation habituelle d'un logiciel informatique d'analyse et de traitement d'images numériques. La Demanderesse, après de nombreux travaux de recherche, a trouvé que, de façon surprenante, l'utilisation d'un tel système associé à un choix de paramètres appropriés et un étalonnage correct, permettait d'augmenter de façon spectaculaire la précision de la méthode et d'obtenir le point de fumée de l'hydrocarbure testé en s'affranchissant de la subjectivité de l'opérateur.

La présente invention a par conséquent pour objet un procédé pour la détermination du point de fumée d'un hydrocarbure, comprenant parmi les différentes étapes définies dans la norme ASTM D 1322 ou ses équivalents, le repérage, parmi différents aspects de la flamme en fonction de la position du brûleur dans la lampe, d'un aspect particulier de la flamme et la lecture de la hauteur de cette flamme sur une échelle graduée en mm, caractérisé par le fait que l'on prend et enregistre, à l'aide d'une caméra numérique ou d'un équivalent d'une telle caméra, une série d'images numériques de la flamme à des intervalles suffisamment rapprochés pour permettre, par analyse de ces images numériques, la détection d'un changement brusque de la forme de la flamme, et que l'on mesure la hauteur de ladite flamme au moment de ce changement brusque de sa forme, la dite hauteur étant assimilée au point de fumée de l'hydrocarbure testé.

De préférence, la caméra numérique sera équipée d'un dispositif photodétecteur à transfert de charge (en anglais *Charge Coupled Device*, et en abrégé CCD). Les intervalles entre deux prises d'images seront de préférence compris entre 0,1 et 2,0 secondes, et en particulier entre 0,5 et 1,0 seconde. Le nombre d'images numériques de chaque série d'images est de préférence au moins égal à 10.

Les opérations de prise d'images numériques et d'analyse et de traitement de ces images en vue du repérage de l'image correspondant au premier changement brusque de la forme de la flamme sont de préférence automatisées grâce à un logiciel spécifique.

Les différentes étapes de la méthode de mesure du point de fumée connue dont il est question ci-dessus et auquel il est fait référence dans le préambule de la revendication de procédé indépendante, réalisées dans les conditions opératoires définies dans la norme ASTM D 1322, ou ses équivalents, sont les suivantes :
(a) préparation et étalonnage d'une lampe de détermination du point de fumée selon les indications de la norme, points 9 et 10,
(b) mise en place d'une mèche d'au moins 125 mm, imbibée d'échantillon, dans le porte-mèche du brûleur de la lampe,
(c) introduction de 20 ml d'échantillon dans le réservoir du brûleur,
(d) vissage du porte-mèche avec la mèche sur le réservoir du brûleur,
(e) coupe de l'extrémité supérieure de la mèche de manière à ce qu'elle dépasse le porte-mèche de 5 mm et insertion du brûleur dans la lampe,
(f) allumage de la mèche et ajustement de la mèche jusqu à ce que la flamme ait une hauteur d'environ 1 cm, et, après une période de combustion d'environ 5 minutes,
(g) élévation du brûleur jusqu'à apparition de fumée, puis,
(h) abaissement lent du brûleur jusqu'à ce que la flamme ne dégage plus de fumée et présente une extrémité supérieure parfaitement arrondie.

Les étapes préliminaires au repérage du changement brusque de la forme de la flamme sont strictement conformes a la norme ASTM D 1322 (en particulier la norme ASTM D 1322-97), ou à un ses équivalents techniques, et il n'est par conséquent pas nécessaire de décrire ici en détail l'ensemble des conditions opératoires et mesures de sécurité permettant une exécution correcte du procédé de determination du point de fumée.

L'étape consistant à obtenir, par abaissement progressif manuel de la mèche du brûleur de la lampe, une flamme ne dégageant plus de fumée et présentant une extrémité superieure légèrement arrondie, du procédé de la présente invention, diffère par contre, de l'étape (b) correspondante du procédé de la norme ASTM D 1322 par le fait que l'on procède à l'acquisition et l'enregistrement d'une série d'images numériques de la flamme et que l'on analyse les images numériques enregistrées à l'aide d'un système d'analyse d'images approprié, de manière à pouvoir en déduire la hauteur maximale de la flamme n'émettant pas de fumée, autrement dit le point de fumée du carburant testé.

L'invention est maintenant décrite en référence aux dessins annexés, non limitatifs, dans lesquels :
- la figure 1, montre, pour quatre angles a différents (0°, 18°, 36° et 90°), l'évolution du diamètre de Feret (en1/10 mm) en fonction de la position d'abaissement du brûleur pendant l'étape (h) du procédé ;
- la figure 2 représente la valeur des niveaux de gris d'une ligne de pixels passant à mi-hauteur de la flamme, perpendiculairement à l'axe de symétrie vertical de celle-ci.

Pour une meilleure compréhension, de l'invention, la Demanderesse décrit d'abord l'évaluation visuelle de la hauteur maximale de la flamme n'émettant pas de fumée prévue par la norme ASTM D 1322 en fournissant ici une traduction partielle du point 11.4 de cette norme :
11.4 Allumer le bruleur et ajuster la mèche de maniére a ce que la flamme ait une hauteur d'environ 10 mm et laisser la lampe brûler pendant environ 5 minutes. Elèver le brûleur jusqu'à apparition de fumée, puis baisser le brûleur lentement en passant par les étapes suivantes d'aspect de la flamme :
11.4.1 une longue pointe, fumée faiblement visible, flamme erratique et sautillante,
11.4.2 une pointe allongée avec des bords latéraux concaves vers le haut (flamme A),
11.4.3 l'extrémité pointue disparaît tout juste, laissant une flamme très légèrement « émoussée » (flamme B),
11.4.4 une pointe bien arrondie (flamme C). Déterminer la hauteur de la flamme B à 0,5 mm près. Noter la hauteur observée.
11.4.4.1 Pour éliminer des erreurs dues à la parallaxe, l'oeil de l'observateur devra être légèrement d'un côté de la ligne centrale de manière à ce que l'image reflétée de la flamme soit visible sur l'échelle graduée d'un côté de la ligne centrale verticale blanche et que la flamme elle-même soit visible contre l'autre côté de l'échelle graduée. Les résultats des deux lectures devraient être identiques.

Dans le procédé de la présente invention, le système technique d'enregistrement et d'analyse d'image utilisé en remplacement de l'oeil de l'observateur sert à la fois à déterminer le moment où la flamme visible correspond à la « flamme B » de la norme, et à mesurer le plus précisément possible la hauteur de cette flamme B.

L'exploitation des images numériques enregistrées au cours de l'abaissement du brûleur qui s'accompagne de la diminution de la taille de la flamme, a montré que le changement brusque de la forme de la flamme, c'est-à-dire l'apparition de la « flamme B », correspondait à un changement brusque, facile à détecter, de la vitesse de diminution du diamètre de Feret de l'image de la flamme. Le diamètre de Feret d'un objet est égal à la distance entre deux tangentes à l'objet, parallèles l'une à l'autre, et définissant un angle α par rapport à l'horizontale, cet angle étant parfois appelé « direction de mesure du diamètre de Feret ». Lorsque l'objet n'est pas un cercle, cette distance dépend de l'angle α que définissent les tangentes par rapport à l'horizontale.

On comprendra facilement que, dans le cas de la flamme dont il s'agit de mesurer les dimensions, la distance entre deux tangentes à la flamme, parallèles l'une à l'autre et à l'horizontale (α = 0°) est égale à la hauteur de la flamme. C'est pourquoi, dans ce qui suit, la hauteur de la flamme est parfois appelée diamètre de Feret à angle α = 0°.

L'exploitation des images en tant que telle, que ce soit au niveau de la forme de la flamme ou de sa hauteur, nécessite une opération supplémentaire, appelée « seuillage » ou « binarisation », utilisée classiquement dans l'analyse et le traitement d'images numériques. Cette opération de seuillage consiste à mettre à zéro tous les pixels ayant un niveau de gris inférieur à une certaine valeur, appelée « seuil », et à 1 tous les pixels ayant une valeur supérieure au seuil.

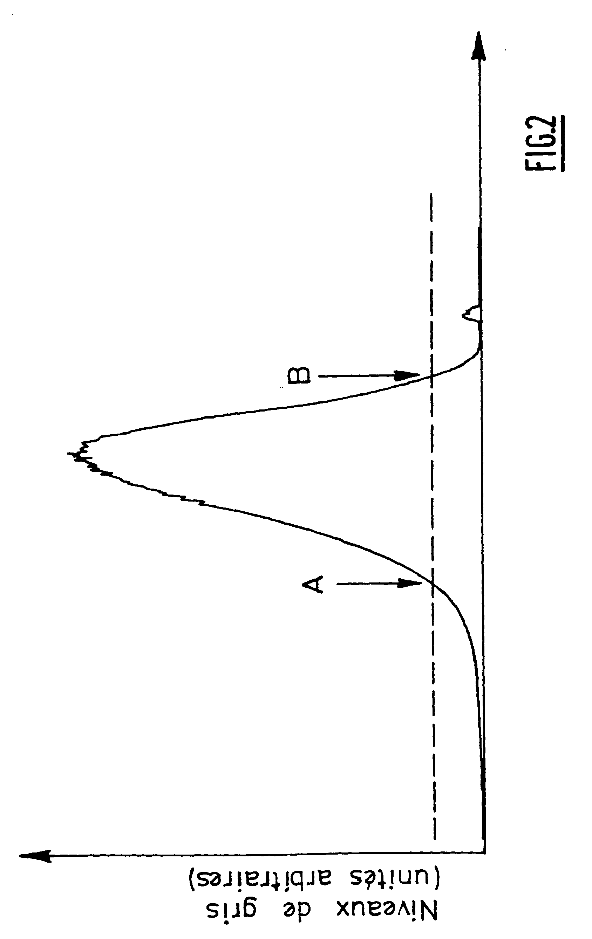

En effet, une flamme est un phénomène physique caractérisé par une augmentation locale de chaleur et d'intensité lumineuse. Bien que l'oeil humain croie distinguer un contour de flamme assez net et précis, l'image numérique en niveaux de gris d'une flamme montre que l'augmentation d'intensité lumineuse est continue et que l'on passe progressivement à des luminosités de plus en plus élevées. Cette continuité de luminosité apparaît clairement à la figure 2 qui représente la valeur des niveaux de gris d'une ligne de pixels passant à mi-hauteur de la flamme, perpendiculairement à l'axe de symétrie vertical de celle-ci.

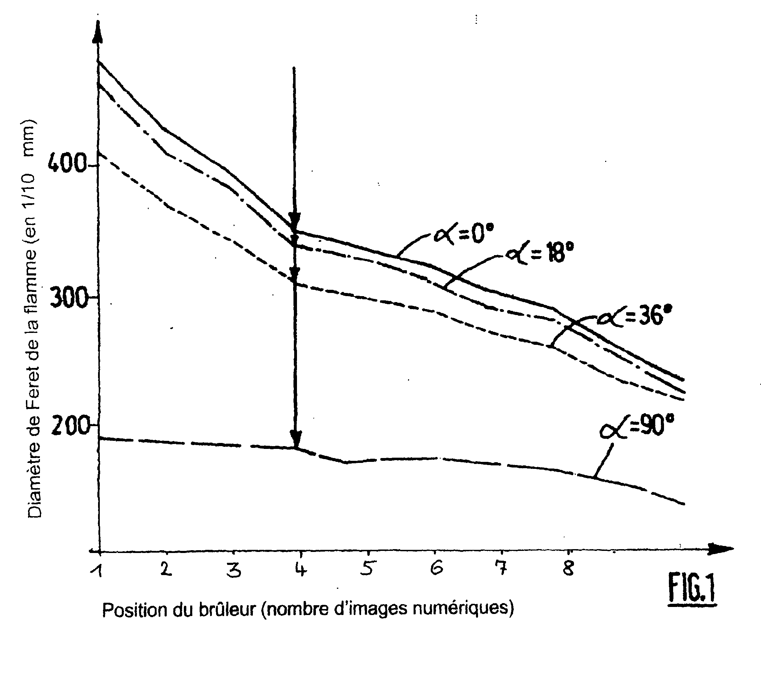

Le changement brusque de la vitesse de diminution du diamètre de Feret, correspondant au moment de l'apparition de la « flamme B », est de préférence déterminé par différentes mesures du diamètre de Feret à un angle α différent de zéro. Cet angle α a néanmoins une valeur relativement faible, de préférence inférieure à 45°. La Figure 1, montre, pour quatre angles α différents (0°, 18°, 36° et 90°), l'évolution du diamètre de Feret (en 1/10 mm) en fonction de la position d'abaissement du brûleur pendant l'étape (h) du procédé. Sur les trois courbes correspondant respectivement à un angle α égal à 0°, 18° et 36°, on observe un point de cassure, signalé par une flèche, où la pente de la courbe (reflétant la vitesse de diminution de la hauteur de flamme) change brusquement. Ce point de cassure ou « pli » correspond au moment, où la flamme est une flamme B au sens de la norme ASTM D1322, pour une position précise du brûleur. On notera que pour un angle α égal à 90 ° (diamètre de Feret correspondant à la largeur de la flamme), on n'observe pas ce point de cassure caractéristique.

Après détermination de la position du brûleur correspondant à la flamme de hauteur maximale n'émettant pas de fumée (flamme B), il s'agit, dans un deuxième temps, de déterminer la hauteur absolue de cette flamme qui, après les corrections appropriées, donne le point de fumée.

On détermine la valeur absolue de la hauteur de la flamme B en la comparant à une échelle graduée qui fait partie de la lampe décrite dans la norme ASTMD 1322. Dans le procédé connu, l'opérateur lit directement la hauteur de la flamme B sur l'échelle graduée, placée derrière celle-ci, en prenant les précautions indiquées au point 11.4.4.1. Dans le procédé selon l'invention, l'échelle graduée n'est pas visible sur l'image numérique de la flamme enregistrée par la caméra numérique à CCD. La détermination de la hauteur de la flamme devra par conséquent se faire par superposition de l'image numérique de la flamme avec l'image numérique de l'échelle graduée (image de calibrage), prise indépendamment par l'appareil à CCD à partir d'une position identique, mais en l'absence de flamme, et avec un éclairage approprié.

Comme pour la détection de la forme de la flamme correspondant à la flamme B, au sens de la norme ASTM D1322, la détermination de la hauteur de la flamme nécessite également une opération de seuillage de l'image numérique.

En effet, pour déterminer la hauteur d'une flamme, il est nécessaire de décider au préalable à partir de quelle intensité lumineuse commence la flamme. Cette décision revient à fixer un seuil (valeur de niveau de gris) au-delà duquel on considère qu'il y a une flamme, et en deçà duquel on considère qu'il n'y a pas de flamme. Dans la figure 2, le seuil choisi correspond à la ligne horizontale en pointillé. Les flèches A et B marquent les limites de la flamme pour ce seuil.

La difficulté réside dans le choix du seuil à utiliser. En effet, plus le seuil choisi sera élevé, plus la valeur absolue de hauteur de flamme que l'on obtiendra sera faible. Le seuil approprié, c'est-à-dire le seuil qui donne la hauteur absolue de la flamme conduisant au point de fumée correct du carburant testé, pourra être déterminé à l'aide d'un ou de plusieurs mélanges de carburants standards (toluène/2,2,4-triméthylpentane) dont la norme ASTM D1322 indique le point de fumée. Pour cela, on réalise, avec un appareillage correctement installé, une série d'images numériques d'une flamme de combustion d'un mélange de carburant standard, on sélectionne, après une opération de seuillage appropriée telle qu'indiquée ci-dessus, l'image numérique correspondant au changement brusque de la vitesse de diminution du diamètre de Feret, on soumet ensuite cette image à une série de seuillages avec différents seuils et l'on retient le seuil qui donne une hauteur de flamme égale au point de fumée indiqué par la norme ASTM D1322 pour le mélange de carburant standard utilisé. Le seuil ainsi déterminé devra être conservé pendant toute la série de mesures.

Pour compléter l'automatisation de la mesure du point de fumée d'un hydrocarbure, conformément à la présente invention, un dispositif annexe d'asservissement continu entre la position du brûleur dans la lampe et le déclenchement des prises d'images par la caméra numérique peut être installé, le brûleur étant dans ce cas positionné à différents niveaux dans la lampe par l'intermédiaire d'un moteur électrique.

La présente invention a également pour objet un dispositif pour la détermination du point de fumée d'un carburant hydrocarboné, comportant
(A) un appareil de détermination du point de fumée conforme aux spécifications de la norme ASTM D 1322,
(B) une caméra numérique, de préférence une caméra numérique à CCD, et, relié à celle-ci,
(C) un système informatique conçu et programmé pour permettre l'enregistrement, l'analyse et le traitement des images numériques prises par la caméra numérique.

Ce dispositif comprend en outre de préférence un filtre anti-infrarouge placé entre l'appareil de détermination du point de fumée (A) et la caméra numérique (B), et qui sert à intercepter le rayonnement infrarouge émis par la flamme qui saturerait les images et les rendrait inexploitables.

La caméra numérique à dispositif à CCD couvre de préférence des longueurs d'ondes allant de l'ultraviolet à l'infrarouge, des modèles couvrant uniquement le spectre visible ou le spectre visible-UV peuvent toutefois également être utilisés. L'utilisation d'un filtre anti-infrarouge étant alors superflue.

La dynamique de la caméra numérique utilisée pour l'acquisition des images numériques n'est pas déterminante. Pour l'obtention d'images présentant une résolution satisfaisante, on utilise toutefois des caméras numériques à CCD d'au moins 10 bits permettant d'enregistrer des images numériques à au moins 512 niveaux de gris. Des caméras numériques à CCD de 16 bits ou plus donnant des images à 32768 niveaux de gris, ou plus, sont particulièrement préférées.

La caméra numérique à CCD comporte généralement un zoom et est placée à une distance d'environ 1 m à 1,5 m de la lampe de l'appareil de détermination du point de fumée. Le zoom est alors réglé de manière à ce que l'image numérique enregistrée contienne l'image de la totalité de l'échelle graduée de l'appareil de détermination du point de fumée. Il est essentiel que la position relative de la caméra numérique à CCD, par rapport à la lampe, ne varie pas entre deux prises de vues. L'invariabilité de cette position est en effet la condition indispensable permettant de comparer entre elles les différentes images enregistrées et les valeurs de point de fumée calculées à partir de celles-ci. Si toutefois la position de la caméra numérique ou le réglage du zoom étaient modifiés par inadvertance, il est possible et nécessaire de procéder à l'acquisition d'une nouvelle image de calibrage (image de l'échelle graduée en l'absence de flamme).

Compte tenu de la très grande sensibilité des capteurs des caméras numériques à CCD, il est nécessaire de prendre un certain nombre de mesures pour garantir une bonne qualité d'images. Les différents protocoles d'étalonnage et d'élimination des bruits de fond sont familiers à l'homme du métier utilisant des capteurs CCD et n'ont pas besoin d'être décrits en détail ici. On peut citer à titre d'exemple de mesures garantissant une bonne qualité d'image, le refroidissement des capteurs CCD par un module Peltier, afin d'éliminer la formation de charges dites « thermiques ».

La présente invention est illustrée à l'aide des exemples d'application suivants.

### Exemple 1

### Validation du procédé selon l'invention par détermination du point de fumée clin mélange de carburant à point de fumée connu - détermination d'un seuil approprié

Après avoir installé et étalonné la lampe à mèche et le dispositif conformément à la présente invention, on réalise deux séries successives, de dix images numériques chacune, d'une flamme de combustion d'un mélange de 15% en volume de toluène et de 85% en volume de 2,2,4-triméthylpentane (point de fumée étalon : 25,8 mm), dont on diminue progressivement la hauteur conformément au protocole décrit au point 11.4 de la norme ASTM D1322. On trace, à partir des images numériques obtenues, qui ont été préalablement soumises à un seuillage d'une valeur égale à environ 15 % de la dynamique de mesure du capteur CCD, soit pour cet essai une valeur de 2000, une courbe de la valeur du diamètre de Feret de la flamme, pour une direction de mesure α de ce même diamètre de Feret égal à 36°, en fonction de la position du brûleur, ou plus exactement en fonction du numéro d'image. On observe un changement brusque de la vitesse de diminution de la hauteur de la flamme pour l'image numéro 4. On applique ensuite à cette image différents seuillages et on retient le seuil qui donne une valeur de diamètre de Feret à α = 0° le plus proche de la valeur théorique de la norme (25,8 mm). Le seuil de 4000 ainsi déterminé donne un diamètre de Feret (α = 0°) de 26,2 mm pour la première série d'images et de 25,9 mm pour la deuxième série d'images.

Le logiciel d'analyse et de traitement des deux séries de dix images numériques, utilisé dans le présent essai est fourni par la société Neosis sous l'appellation commerciale Visilog 6. Les valeurs de seuil retenues et les valeurs de l'angle α pour le calcul des diamètres de Feret correspondants ont été déterminées préalablement à l'aide de différents produits étalons conformément à la présente invention dans les conditions opératoires conformes à la norme ASTM D 1322.

### Exemple 2

### Répétabilité de la mesure de la hauteur de flamme

Avec un dispositif selon l'invention comportant
(a) un appareil de mesure du point de fumée selon la norme ASTM D 1322,
(b) une caméra numérique à CCD (16 bits) munie d'un zoom,
(c) relié à la caméra numérique, un ordinateur muni du logiciel Visilog 6 de la société Neosis, capable d'enregistrer, d'analyser puis de traiter les images numériques provenant de la caméra numérique, et
(d) un filtre anti-infrarouge placé entre (a) et (b),
   on procède à l'acquisition de trois séries successives de quatre images numériques chacune, correspondant respectivement à quatre hauteurs différentes d'une flamme de combustion d'un hydrocarbure à analyser. Les images numériques ainsi obtenues sont soumises à un seuillage avec le seuil égal à 4000, déterminé dans l'exemple 1.

On obtient les valeurs de hauteur de flamme (exprimées en mm) suivants :

| Série n° | Flamme 1 | Flamme 2 | Flamme 3 | Flamme 4 |
|---|---|---|---|---|
| 1 | 15,9 | 11,4 | 9,4 | 5,6 |
| 2 | 15,9 | 11,2 | 9,4 | 5,6 |
| 3 | 16,1 | 11,2 | 9,2 | 5,7 |
| Moyenne | 15,9 | 11,3 | 9,3 | 5,6 |
| Ecart-type | **0,1** | **0,1** | **0,1** | **0,1** |
| Répétabilité calculée | **0,3** | **0,3** | **0,3** | **0,3** |
| Répétabilité ASTM D 1322 | 2 | 2 | 2 | 2 |

On constate que les écarts-types sont de l'ordre de 0,1 mm.

Les répétabilités obtenues avec le procédé et le dispositif conformes à la présente invention sont de l'ordre de 6 à 7 fois meilleures que celles annoncées dans la norme ASTM D 1322

## Revendications

1. Procédé pour la détermination du point de fumée d'un hydrocarbure, comprenant parmi les différentes étapes définies dans la norme ASTM D 1322 ou ses équivalents, le repérage, parmi différents aspects de la flamme en fonction de la position du brûleur dans la lampe, d'un aspect particulier de la flamme et la lecture de la hauteur de cette flamme sur une échelle gradué en mm, caractérisé vpar le fait que l'on prend et enregistre, à l'aide d'une caméra numérique ou d'un équivalent d'une telle caméra, au moins une série d'images numériques de la flamme à des intervalles suffisamment rapprochès pour permettre, par analyse de ces images numériques, la détection d'un changement brusque de la forme de la flamme correspondant à l'apparition d'une flamme (B) dont l'extrémité pointue disparaît tout juste, laissant une flamme très légèrement émoussée, et que l'on mesure la hauteur de ladite flamme au moment de ce changement brusque de sa forme, la dite hauteur étant assimilée au point de fumée de l'hydrocarbure testé.

2. Procédé selon la revendication 1, **caractérisé par le fait que** la caméra numérique comprend un dispositif photodétecteur à transfert de charge (CCD).

3. Procédé selon les revendications 1 et 2, caractérisè par le fait que les intervalles entre les différentes prises d'image sont compris entre 0,1 et 2,0 secondes, et de préférence entre 0,5 et 1,0 seconde.

4. Procède selon l'une quelconque des revendications précédentes, **caractérisé par le fait que** la détection du changement brusque de la forme de la flamme est réalisée par mesure du changement brusque de la vitesse de diminution du diamètre de Féret de l'image de la flamme.

5. Procédé selon la revendication 4, **caractérisé par le fait que**, pour détecter le changement brusque de la vitesse de diminution du diamètre de Feret, on mesure ce diamètre de Feret à un angle a inférieur à 45°.

6. Procédé selon l'une des revendications 4 et 5, **caractérise par le fait que** la hauteur de la flamme est égale au diamétre de Feret pour α = 0° de l'image de la flamme.

7. Procède selon l'une des revendications 4 à 6, **caractérisé par le fait que** l'image numérique correspondant au changement brusque de la vitesse de diminution du diamètre de Feret est soumise à une opération de seuillage utilisant un seuil déterminé à l'aide, d'un ou de plusieurs mélanges de carburants standards à point de fumée connue.

8. Procédé selon l'une des revendications précédentes, **caractérisé par le fait que** la caméra numérique à dispositif à transfert de charge (CCD) couvre des longueurs d'ondes allant de l'ultraviolet à l'infrarouge.

9. Procédé selon l'une des revendications précédentes, **caractérisé par le fait que** l'on interpose entre la flamme et la caméra numérique à CCD un filtre anti-infrarouge.

10. Procédé selon l'une des revendications précédentes, **caractérisé par le fait que** la caméra numérique à CCD permet d'enregistrer des images numériques d'au moins 512 niveaux de gris, et de préférence d'au moins 32768 niveaux de gris.

11. Procédé selon l'une quelconque des revendications précédentes, **caractérisé par le fait que** l'on utilise une caméra numérique à CCD avec zoom et que l'on place cette caméra à une distance d'environ 1 m à 1,5 m de la lampe.

12. Procédé selon la revendication 11, **caractérisé par le fait que** le zoom est réglé de manière à ce que l'image numérique enregistrée contienne l'image de la totalité de l'échelle graduée de l'appareil de détermination du point de fumée.

13. Procédé selon l'une quelconque des revendications précédentes, **caractérisé par le fait que** le nombre d'images numériques de chaque série est au moins égal à 10.

14. Procédé selon les revendications précédentes, **caractérisé par le fait que** les opérations de prise d'images numériques et d'analyse et de traitement de ces images sont automatisées grâce à un logiciel spécifiques.

15. Dispositif pour la détermination du point de fumée d'un carburant hydrocarboné, comportant
- un appareil de détermination du point de fumée conforme aux spécifications de la norme ASTM D1322,
- une caméra numérique apte à permettre la prise d'au moins une série d'images numériques d'une flamme à des intervalles suffisamment rapprochés pour permettre, par analyse de ces images numériques la détection d'un changement brusque de la forme de la flamme correspondant à l'apparition d'une flamme (B) dont l'extrémité pointue disparaît tout juste, laissant une flamme très légèrement émoussée et, relié à celle-ci,
- un système informatique conçu et programmé pour permette l'enregistrement, l'analyse et le traitement des images numériques prises par la caméra numérique.

16. Dispositif selon la revendication 15, **caractérisé par le fait qu'**il comprend en outre un filtre anti-infrarouge placé entre l'appareil de détermination du point de fumée et la caméra numérique.

17. Dispositif la revendication 15 ou 16, **caractérisé par le fait que** la caméra numérique couvre des longueurs d'ondes allant de l'ultraviolet à l'infrarouge.

18. Dispositif selon l'une des revendications 15 à 17, **caractérisé par le fait que** la caméra numérique permet d'enregistrer des images numériques à au moins 512 niveaux de gris, de préférence à au moins 32768 niveaux de gris.

19. Dispositif selon l'une des revendications 15 à 18, **caractérisé par le fait que** la caméra numérique comporte un zoom et est placée à une distance d'environ 1 m à 1,5 m de la lampe de l'appareil de détermination du point de fumée.

20. Dispositif selon la revendication 19, **caractérisé par le fait que** le zoom est réglé de manière à ce que l'image numérique enregistrée contienne l'image de la totalité de l'échelle graduée de l'appareil de détermination du point de fumée.

## Claims

1. A method for determining the smoke point of a hydrocarbon, comprising among the different steps defined in the ASTM D 1322 standard or its equivalents, the identification, among different appearances of the flame according to the position of the burner in the lamp, of a particular appearance of the flame and the reading of the height of this flame on a scale graduated in mm, **characterized in that** at least one series of digital images of the flame is taken and stored using a digital camera or an equivalent of such a camera, at intervals that are sufficiently close to enable, by analyzing these digital images, the detection of a sudden change in the shape of the flame corresponding to the appearance of a flame (B), the pointed end of which just disappears, leaving a flame that is very slightly blunted, and that the height of said flame is measured at the moment of this sudden change in its shape, said height being considered as the smoke point of the hydrocarbon under test.

2. The method as claimed in claim 1, **characterized in that** the digital camera comprises a photodetecting charge-coupled device (CCD).

3. The method as claimed in claims 1 and 2, **characterized in that** the image-taking intervals are between 0.1 and 2.0 seconds, and preferably between 0.5 and 1.0 second.

4. The method as claimed in any one of the preceding claims, **characterized in that** the detection of the sudden change in the shape of the flame is achieved by measuring the sudden change in the speed of reduction of the Feret diameter of the image of the flame.

5. The method as claimed in claim 4, **characterized in that**, to detect the sudden change in the speed of reduction of the Feret diameter, this Feret diameter is measured at an angle α less than 45°.

6. The method as claimed in one of claims 4 and 5, **characterized in that** the height of the flame is equal to the Feret diameter for α = 0° of the image of the flame.

7. The method as claimed in one of claims 4 to 6, **characterized in that** the digital image corresponding to the sudden change in the speed of reduction of the Feret diameter is subjected to a thresholding operation using a determined threshold with the help of one or more standard fuel mixtures with known smoke point.

8. The method as claimed in one of the preceding claims, **characterized in that** the charge-coupled device (CCD) digital camera covers wavelengths ranging from the ultraviolet to the infrared.

9. The method as claimed in one of the preceding claims, charactreized in that an anti-infrared filter is placed between the flame and the CCD digital camera.

10. The method as claimed in one of the preceding claims, **characterized in that** the digital camera with CCD can be used to store digital images with at least 512 gray levels and preferably at least 32 768 gray levels.

11. The method as claimed in any one of the preceding claims, **characterized in that** a CCD digital camera with zoom is used and that this camera is placed at a distance of approximately 1 m to 1.5 m from the lamp.

12. The method as claimed in claim 11, **characterized in that** the zoom is set so that the stored digital image contains the image of all the graduated scale of the device for determining the smoke point.

13. The method as claimed in any one of the preceding claims, **characterized in that** the number of digital images of each series is at least equal to 10.

14. The method as claimed in the preceding claims, **characterized in that** the digital image-taking operations and the analysis and processing of these images are automated using a dedicated software package.

15. A device for determining the smoke point of a hydrocarbon fuel, comprising :
- an apparatus for determining the smoke point conforming to the specifications of the ASTM D 1322 standard,
- a digital camera adapted for enabling taking at least one series of digital images of a flame at intervals that are sufficiently close to enable, by analyzing these digital images, the detection of a sudden change in the shape of the flame corresponding to the appearance of a flame (B), the pointed end of which just disappears, leaving a flame that is very slightly blunted, and linked to said camera,
- a computer system designed and programmed to enable digital images taken by the digital camera to be stored, analyzed and processed.

16. The device as claimed in claim 15, **characterized in that** it also comprises an anti-infrared filter placed between the apparatus for determining the smoke point and the digital camera.

17. The device as claimed in claim 15 or 16, **characterized in that** the digital camera covers wavelengths ranging from the ultraviolet to the infrared.

18. The device as claimed in one of claims 15 to 17, **characterized in that** the digital camera can be used to store digital images with at least 512 gray levels, preferably at least 32 768 gray levels.

19. The device as claimed in one of claims 15 to 18, **characterized in that** the digital camera comprises a zoom and is placed at a distance of approximately 1 m to 1.5 m from the lamp of the apparatus for determining the smoke point.

20. The device as claimed in claim 19, **characterized in that** the zoom is set so that the stored digital image contains the image of all the graduated scale of the apparatus for determining the smoke point.

## Patentansprüche

1. Verfahren zur Bestimmung des Rauchpunkts eines Kohlenwasserstoffs, enthaltend unter den verschiedenen Schritten, die in der Norm ASTM D 1322 oder ihren Äquivalenten beschrieben sind, das Ausfindigmachen eines besonderen Aspekts der Flamme unter verschiedenen Aspekten der Flamme abhängig von der Position des Brenners in der Lampe und das Ablesen der Höhe dieser Flamme auf einem in mm eingeteilten Maßstab,
**dadurch gekennzeichnet, dass**
mittels einer Digitalkamera oder eines Äquivalents dieser Kamera zumindest eine Reihe von Digitalbildern der Flamme in Intervallen aufgenommen und gespeichert wird, die hinreichend nahe sind, um durch eine Analyse dieser Digitalbilder die Erfassung einer plötzlichen Änderung der Form der Flamme zu ermöglichen, die dem Auftreten einer Flamme (B) entspricht, deren spitzes Ende gerade verschwindet, was eine sehr leicht abgestumpfte Flamme belässt, und
die Höhe dieser Flamme im Augenblick dieser plötzlichen Änderung ihrer Form gemessen wird, wobei diese Höhe mit dem Rauchpunkt des untersuchten Kohlenwasserstoffs in Verbindung gebracht wird.

2. Verfahren gemäß Anspruch 1, **dadurch gekennzeichnet, dass** die Digitalkamera eine Photodetektionsvorrichtung mit Ladungstransfer (CCD) enthält.

3. Verfahren gemäß Anspruch 1 oder 2, **dadurch gekennzeichnet, dass** die Intervalle zwischen den verschiedenen Bildaufnahmen zwischen 0,1 und 2,0 Sekunden liegen, vorzugsweise zwischen 0,5 und 1,0 Sekunde.

4. Verfahren gemäß einem der vorigen Ansprüche, **dadurch gekennzeichnet, dass** die Erfassung der plötzlichen Änderung der Form der Flamme verwirklicht wird durch Messen der plötzlichen Änderung der Geschwindigkeit der Verringerung des Feret-Durchmessers des Bilds der Flamme.

5. Verfahren gemäß Anspruch 4, **dadurch gekennzeichnet, dass** zum Erfassen der plötzlichen Änderung der Geschwindigkeit der Verringerung des Feret-Durchmessers dieser Feret-Durchmesser mit einem Winkel von weniger als 45° gemessen wird.

6. Verfahren gemäß Anspruch 4 oder 5, **dadurch gekennzeichnet, dass** bei α = 0 für das Bild der Flamme die Höhe der Flamme gleich dem Féret-Durchmesser ist.

7. Verfahren gemäß einem der Ansprüche 4 bis 6, **dadurch gekennzeichnet, dass** das Digitalbild, das der plötzlichen Änderung der Geschwindigkeit der Verringerung des Féret-Durchmessers entspricht, einer Schwellenwertverarbeitung unterzogen wird unter Verwendung einer Schwelle, die mit Hilfe einer oder mehrerer Mischungen von Standardkohlenwasserstoffen mit bekanntem Rauchpunkt festgelegt wird.

8. Verfahren gemäß einem der vorigen Ansprüche, **dadurch gekennzeichnet, dass** die Digitalkamera mit Ladungstransfereinrichtung (CCD) die Wellenlängen von ultraviolett bis infrarot abdeckt.

9. Verfahren gemäß einem der vorigen Ansprüche, **dadurch gekennzeichnet, dass** zwischen die Flamme und die CCD-Digitalkamera ein Infrarot-Sperrfilter eingesetzt wird.

10. Verfahren gemäß einem der vorigen Ansprüche, **dadurch gekennzeichnet, dass** die CCD-Digitalkamera es ermöglicht, Digitalbilter mit mindestens 512 Graustufen zu speichern, vorzugsweise mit mindestens 32768 Graustufen.

11. Verfahren gemäß einem der vorigen Ansprüche, **dadurch gekennzeichnet, dass**
eine CCD-Digitalkamera mit Zoom verwendet wird und
diese Kamera in einem Abstand von ungefähr 1 m bis 1,5 m von der Lampe angeordnet wird.

12. Verfahren gemäß Anspruch 11, **dadurch gekennzeichnet, dass** der Zoom so gesteuert wird, dass das gespeicherte Digitalbild das Bild des gesamten unterteilten Maßstabs der Einrichtung zum Bestimmen des Rauchpunkts enthält.

13. Verfahren gemäß einem der vorigen Ansprüche, **dadurch gekennzeichnet, dass** die Anzahl der Digitalbilder jeder Reihe zumindest gleich 10 ist.

14. Verfahren gemäß einem der vorigen Ansprüche, **dadurch gekennzeichnet, dass** die Vorgänge der Aufnahme von Digitalbildern und der Analyse und Verarbeitung dieser Bilder mittels eines spezifischen Computerprogramms automatisiert sind.

15. Vorrichtung zum Bestimmen des Rauchpunkts eines Kohlenwasserstoffs, enthaltend
- eine Einrichtung zum Bestimmen des Rauchpunkts, die die Spezifikationen der Norm ASTM D 1322 erfüllt,
- eine Digitalkamera, die daran angepasst ist, das Aufnehmen zumindest einer Reihe von Digitalbildern der Flamme in Intervallen zu ermöglichen, die hinreichend nahe sind, um durch eine Analyse dieser Digitalbilder die Erfassung einer plötzlichen Änderung der Form der Flamme zu ermöglichen, die dem Auftreten einer Flamme (B) entspricht, deren spitzes Ende gerade verschwindet, was eine sehr leicht abgestumpfte Flamme belässt, und, verbunden mit dieser,
- ein Rechnersystem, das entworfen und aufgebaut ist, das Speichern, Analysieren und Verarbeiten von Digitalbildern zu ermöglichen, die durch die Digitalkamera aufgenommen wurden.

16. Vorrichtung gemäß Anspruch 15, **dadurch gekennzeichnet, dass** sie weiter ein Infrarot-Sperrfilter enthält, das zwischen die Einrichtung zum Bestimmen des Rauchpunkts und die Digitalkamera eingesetzt ist.

17. Vorrichtung gemäß Anspruch 15 oder 16, **dadurch gekennzeichnet, dass** die Digitalkamera die Wellenlängen von ultraviolett bis infrarot abdeckt.

18. Vorrichtung gemäß einem der Ansprüche 15 bis 17, **dadurch gekennzeichnet, dass** die Digitalkamera es ermöglicht, Digitalbilter mit mindestens 512 Graustufen zu speichern, vorzugsweise mit mindestens 32768 Graustufen.

19. Vorrichtung gemäß einem der Ansprüche 15 bis 18, **dadurch gekennzeichnet, dass** die Digitalkamera einen Zoom enthält wird und in einem Abstand von ungefähr 1 m bis 1,5 m von der Lampe der Einrichtung zum Bestimmen des Rauchpunkts angeordnet ist.

20. Vorrichtung gemäß Anspruch 19, **dadurch gekennzeichnet, dass** der Zoom so gesteuert wird, dass das gespeicherte Digitalbild das Bild des gesamten unterteilten Maßstabs der Einrichtung zum Bestimmen des Rauchpunkts enthält.
